## Europäisches Patentamt
## European Patent Office
## Office européen des brevets

(19)

(11) Veröffentlichungsnummer: **0 247 295**
**B1**

(12)

# EUROPÄISCHE PATENTSCHRIFT

(45) Veröffentlichungstag der Patentschrift:
26.09.90

(51) Int. Cl.⁵: **B62D 33/06**

(21) Anmeldenummer: 87102861.9

(22) Anmeldetag: 27.02.87

(54) Fahrerhaus-Baureihe für Frontlenker-Lastkraftwagen.

(30) Priorität: 28.05.86 DE 3617961

(43) Veröffentlichungstag der Anmeldung:
02.12.87 Patentblatt 87/49

(45) Bekanntmachung des Hinweises auf die Patenterteilung:
26.09.90 Patentblatt 90/39

(84) Benannte Vertragsstaaten:
DE FR GB IT NL SE

(56) Entgegenhaltungen:
EP-A- 0 141 959
CH-A- 442 045
DE-A- 2 821 598
DE-B- 1 279 490
US-A- 3 055 699

AUTOMOTIVE ENGINEERING, Band 88, Nr. 7, Juli 1980, Seiten 93-95, New York, N.Y., US;"Modular Design Simplifies Truck Cab Range"
LASTAUTO OMNIBUS, Nr. 9, September 1977, Seite 25, Stuttgart
M.A.N FORSCHEN PLANEN BAUEN, Nr. 11, November 1980, Seiten 54-59, Augsburg, W. SCHMIDT: "Vario-System - ein neues Konzept für Nutzfahrzeuge Zeitschrift "Nutzfahrzeuge", Juli 1977, S.37

(73) Patentinhaber: MAN Nutzfahrzeuge Aktiengesellschaft, Dachauer Strasse 667 Postfach 50 06 20,
D-8000 München 50(DE)

(72) Erfinder: Schubert, Klaus, Dr., Packenreiterstrasse 21,
D-8000 München 60(DE)
Erfinder: Schmidt, Werner, Vogelloh 54,
D-8000 München 50(DE)
Erfinder: Watzek, Gerhard, Eduard-Spranger-Strasse 34,
D-8000 München 45(DE)
Erfinder: Koch, Erich, Richard-Strauss-Strasse 11,
D-8047 Karlsfeld(DE)
Erfinder: John, Herbert, Vogelloh 62,
D-8000 München 50(DE)
Erfinder: Kraus, Wolfgang, Prof., Eppendorfer Weg 17b,
D-2000 Hamburg 20(DE)

## Beschreibung

Die Erfindung betrifft eine Fahrerhaus-Baureihe für Frontlenker-Lastkraftwagen mit Merkmalen entsprechend dem Oberbegriff des Anspruches 1.

Aus der US PS 3 055 699 ist eine Fahrerhausgerippe-Konstruktion bekannt, der das Ziel zugrunde liegt, durch spezielle Ausgestaltung der den Motor überdeckenden Bodengruppe und das Vorsehen spezieller Versteifungsorgane ein insgesamt stabiles, verwindungssteifes, trotzdem aber relativ leichtes Fahrerhaus zu schaffen. Standardisierungsmaßnahmen im Hinblick auf eine Fahrerhaus-Baureihe sind dieser Schrift jedoch nicht entnehmbar.

Aus der DE OS 2 821 589 ist es bekannt, den Einstieg für ein Fahrerhaus komplett von diesem getrennt am Fahrgestellrahmen anzuordnen. Weitere Hinweise, insbesondere in Richtung einer Fahrerhaus-Baureihe sind dieser Schrift nicht entnehmbar.

Die Literaturstelle "Nutzfahrzeuge, Juli 1977, Seite 37 " gibt an, daß es bei Nutzfahrzeugherstellern bekannt ist, Frontlenker-Lastkraftwagen mit unterschiedlich großen, nach vorn kippbaren Fahrerhäusern auszustatten. Über die Ausgestaltung der Fahrerhäuser als solches, insbesondere die konstruktiven Einzelheiten, ist des weiteren nichts ausgesagt.

Die Erfindung geht aus von einem Stand der Technik, wie aus der US-Zeitschrift "Automotive Engineering, Volume 88, Number 7 ", Seiten 93 bis 95, bekannt. Dabei werden Möglichkeiten aufgezeigt, bei einer Fahrerhaus-Baureihe für Frontlenker-Lkw durch modulare Bauweise die Herstellung der Fahrerhäuser zu rationalisieren. Die Rede ist dabei von 125 verschiedenen vorgefertigten Komponenten, von denen wenigstens 80 in jedem der Fahrerhäuser der Baureihe verwendet sein sollen. Als Hauptmodule sind dabei erwähnt die beiden Türen, Rahmenteile, Dachlängsträger, Sitze, Bodenplatten, Armaturenbretter, Rückwandhauptteile und Unterbodenteile.

Obschon damit bereits Schritte in die richtige Richtung eingeschlagen sind, läßt die noch relativ große Anzahl von einzeln miteinander zu verbindenden Teile noch ein erhebliches Defizit an Rationalisierungsmöglichkeiten im Herstellungs- und Montagebereich erkennen.

Es ist daher Aufgabe der Erfindung, für die Realisierung einer Fahrerhaus-Baureihe für Frontlenker-Lastkraftwagen eine Konzeption zu finden, nach der die Herstellung der Fahrerhäuser der Baureihe mit weniger Werkzeugaufwand als bislang und eine Serienfertigung unter weitestgehender Automatisierung möglich und aufgrund einer speziellen Konstruktion mit dem fertigen Fahrerhaus ein hoher Bedienungs- und Servicekomfort gegeben ist.

Diese Aufgabe ist erfindungsgemäß durch die im Kennzeichen des Anspruches 1 angegebene Fahrerhaus-Konzeption gelöst.

Vorteilhafte Einzelheiten und Ausgestaltungen dieser Lösung sind in den Unteransprüchen gekennzeichnet.

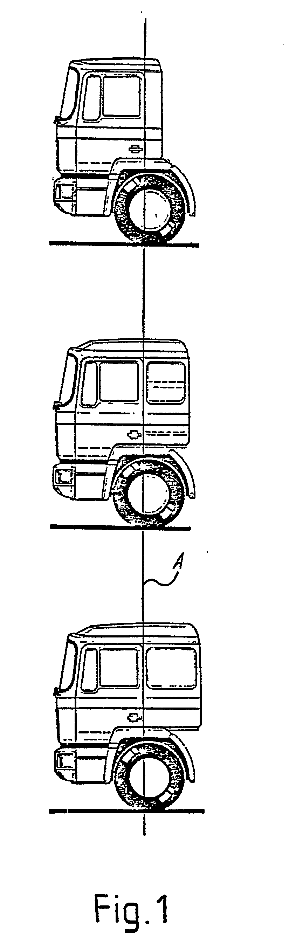

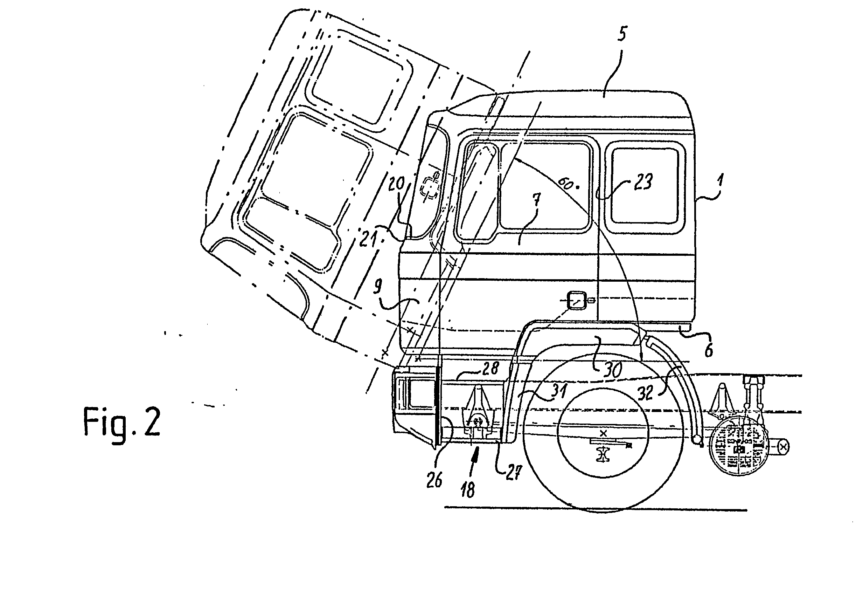

Nachstehend sind Einzelheiten der erfindungsgemäßen Fahrerhaus-Baureihe sowie die hierdurch erzielbaren Vorteile anhand der Zeichnung näher erläutert. Dabei sind in Fig. 1 bis 22 zum Teil weitgehend schematisiert jeweils verschiedene Ansichten eines Fahrerhauses bzw. von Details desselbens aufgezeigt.

Aus Fig. 1 sind drei verschieden große Fahrerhäuser einer Fahrerhaus-Baureihe für Frontlenker-LKW mit nach vorn kippbaren Fahrerhäusern ersichtlich. Durch die Linie A wird dabei ersichtlich, daß der über derselben liegende Teil der Fahrerhäuser trotz unterschiedlicher Größe weitestgehend standardisiert ist. Das aus einer Rückwand (1), zwei Seitenwänden (2, 3), einer Frontwand (4), einer Dachgruppe (5) und einer Bodengruppe (6) zusammengesetzte Rohhaus wird dabei durch eine Anzahl standardisierter Funktionsmodule ergänzt, die unverändert an Fahrerhäusern unterschiedlicher Größe am hierfür entsprechend vorbereiteten Rohhaus anbaubar sind. Dieser teilmodulare Aufbau erlaubt überall dort, wo notwendig, einen bedarfsweisen Austausch von Bauteilen. Als solche Funktionsmodule sind vorgesehen die beiden Türen (7, 8), zwei an der Frontwand (4) befestigbare, als Flankenschutz dienende und bei Beschädigung rasch auswechselbare Eckteile (9, 10), eine klappbare, zur Abdeckung von an der Frontwand (4) bzw. in deren Bereich befestigter Funktionselemente dienende Frontklappe (11), Radkasten -und -Verblendteile (12, 13, 14, 15, 30, 31, 32, 33) ein modulares Armaturenbrett (16) und ggf. eine klappbare untere Liege (17), die insbesondere in Fernfahrerhäusern eingebaut ist.

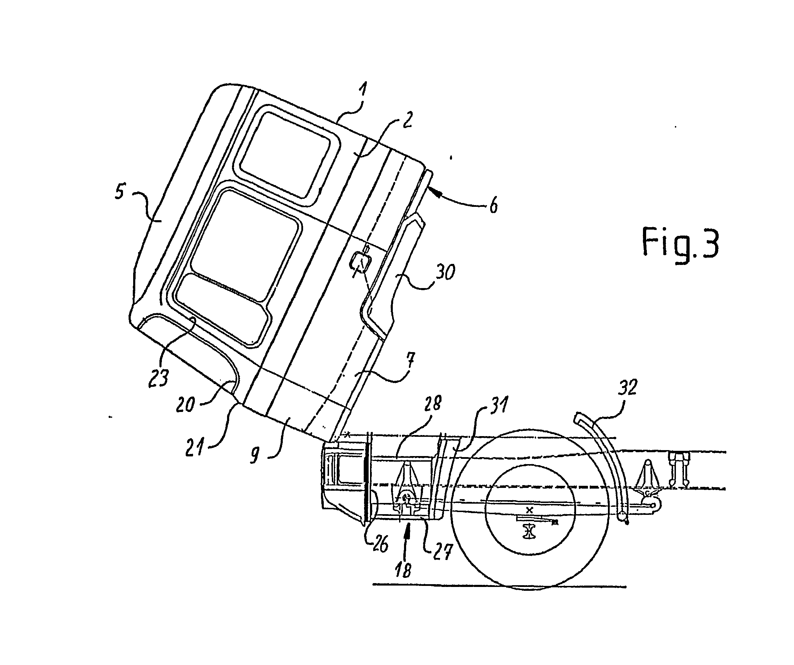

Der komplette Einstieg (18) ist, wie gut aus Fig. 3 ersichtlich, vom Fahrerhaus getrennt am Fahrgestell-Rahmen befestigt. Hierdurch ist eine gegenüber bisherigen Lösungen wesentlich bessere Zugänglichkeit der vom Fahrerhaus normalerweise abgedeckten Antriebs- und sonstigen Aggregate des Frontlenker-Lastkraftwagens gegeben. Außerdem können die beiden Einstiege (18) zur Ablage von Werkzeugen und Ersatzteilen und als Montagebühne benutzt werden.

An exponierten Stellen des Fahrerhauses sind Formversteifungsorgane vorgesehen, von denen zumindest einige für die Übernahme von Zusatzfunktionen ausgebildet sind. Näheres hierzu weiter hinten.

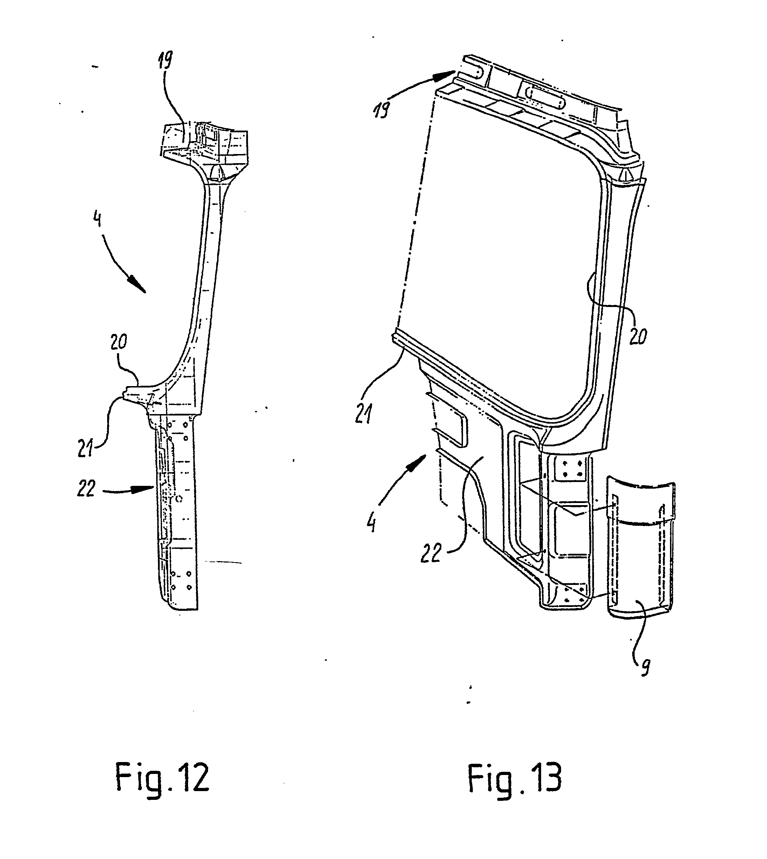

Die Frontwand (4) ist als einteiliges, in einem Stück gepreßtes Blech-Preßteil ausgebildet (siehe Figuren 12 und 13). Die Frontwand (4) ist am Übergang (19) zum Dachbereich zur Bildung einer Dachversteifung auf voller Breite nach hinten gezogen und dort mit Schwitzwasser- und Lackierbadfarbabläufe ermöglichenden Vorkehrungen versehen. Zu diesen Vorkehrungen sind Rinnen, Lang- oder Rundlöcher oder sonstige Durchbrüche oder Schlitze zu zählen, die notwendig sind, um einen Ablauf von Kondenswasser bzw- Farbe nach dem Lackiervorgang beim Austauchen aus dem Lackierbad aus den jeweiligen Hohlräumen zu gewährleisten. Unterhalb der sich an die Öffnung (20) für die Windschutzscheibe anschließenden Brüstungslinie (21) ist die Frontwand (4) ebenfalls auf gesamter Breite zurückgezogen. In diesem zurückgezogenen Bereich (22) sind die beiden Eckteile (9, 10), die Frontklappe (11) mit Austellmechanismus und die von der Frontklappe (11) abdeckbaren Funktionselemente befestigbar. Diese Funktionselemente sind im Detail nicht dargestellt.

Die beiden Seitenwände (2, 3) des Rohhauses sind ebenfalls jeweils als einstückige Blechpreßteile ausgebildet und bei allen Fahrerhausvarianten für den Einbau der einheitlich gleichen Türen (7 bzw. 8) mit entsprechend gleichen Türausschnitten (23, 24) versehen. Dadurch kann der komplizierte Türausschnitt bei allen Seitenwand-Varianten mit ein- und demselben Werkzeugsatz gefertigt werden. Entsprechendes gilt auch für die Türen, die ebenfalls mit den gleichen Werkzeugsätzen und aus insgesamt gleichen Bauteilen herstellbar sind.

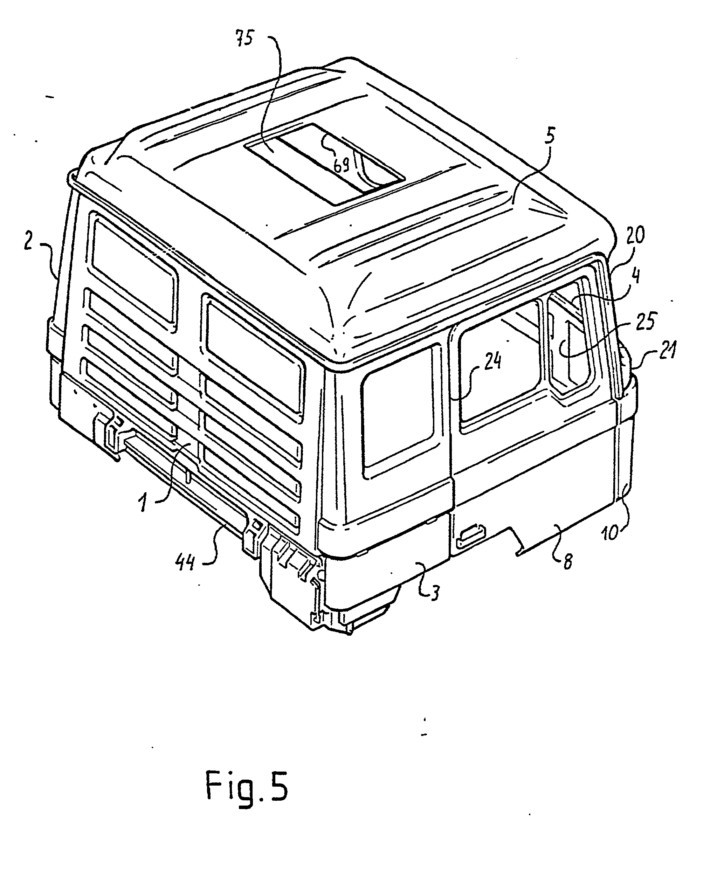

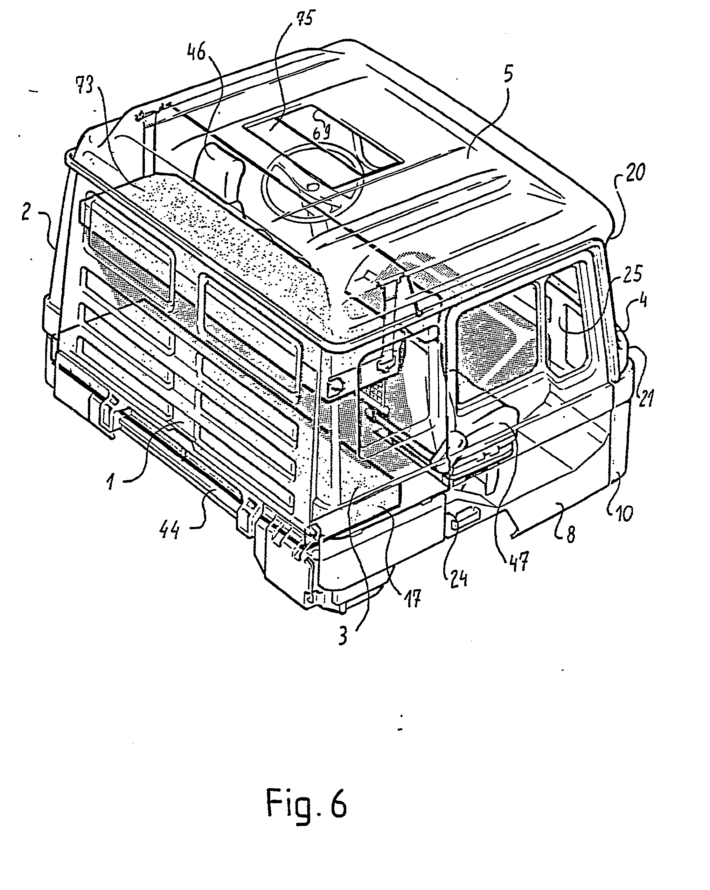

An der Frontwand (4) ist innen über die ganze Breite gehend unterhalb der Brüstungslinie (21) eine als Formversteifungsorgan und für die Befestigung von im einzelnen nicht dargestellten Funktionselementen dienende Frontversteifungsplatte (25) angebracht (siehe Figuren 5 und 6).

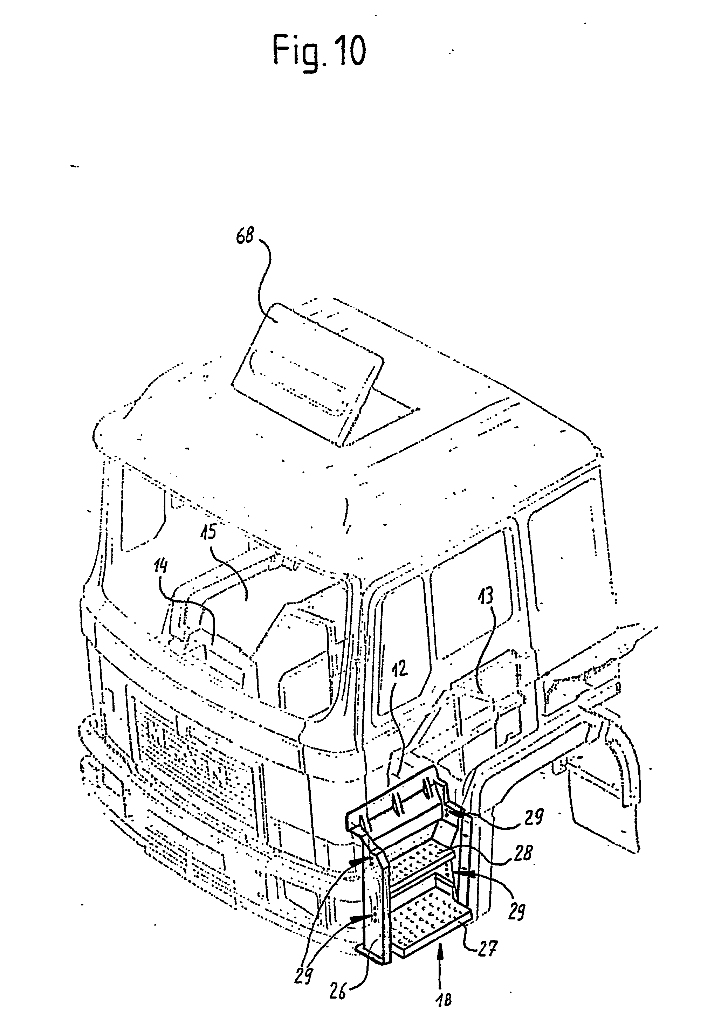

Der Kasten (26) des komplett vom Fahrerhaus getrennten und am Fahrgestellrahmen befestigten Einstiegs (18) ist, wie insbesondere gut aus Fig. 1 ersichtlich, für alle Fahrerhausgrößen gleich. Wie im einzelnen aus Fig. 10 ersichtlich, sind die Trittbretter (27, 28) jedes Einstieges (18) in dessen Kasten (26) höhenverstellbar montierbar. Hierzu sind im Einstiegskasten (26) entsprechende Montagehilfen vorgesehen. Diese Montagehilfen können, wie in Fig. 10 gezeigt, in Form von in unterschiedlichen Höhenlagen angeordneten Löchern (29) realisiert sein. Die höhenverstellbare Anordnung der Trittbretter (27, 28) dient dazu, um verschiedenen Reifengrößen und Achsen Rechnung tragend, die gesetzlich vorgeschriebenen Trittbretthöhen und -abstände einhalten zu können.

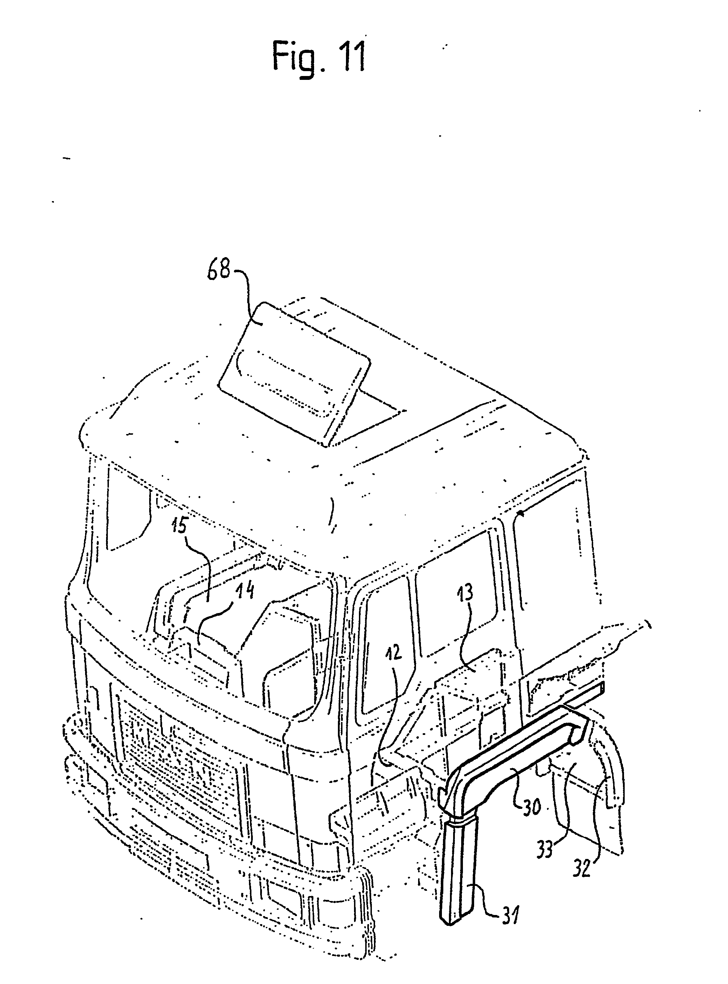

Die beiden Radkästen sind – wie bereits weiter vorn angedeutet – bei dieser Fahrerhaus-Baureihe mehrteilig ausgebildet. Ein vorderes Teil (12, 14) jedes Radkastens ist dabei wie aus Fig. 10, 11 andeutungsweise ersichtlich, entweder einstückig mit dem Einstiegskasten (20) ausgebildet oder als separates Bauteil an der hinteren Seitenwand des Einstieg-Kastens (26) befestigt. Daran anschließend ist ein oberes Teil (13, 15) durch einen Abschnitt der Bodengruppe (6) des Fahrerhauses gebildet. Diese Radkastenteile (12, 13, 14, 15) sind durch äußere Kotflügel ergänzt, die nur als Blenden dienen und aus schlagzähem Kunststoffmaterial hergestellt sind. Diese Blenden sind in Fig. 11 besonders hervorgehoben. Eine dieser Kotflügel-Blenden (30) ergänzt das an der Bodengruppe (6) vorhandene obere Radkastenteil (13 bzw. 15) und ist seitlich anschließend an diesem angeordnet. Eine weitere Blende (3i) ist seitlich anschließend an dem am Einstiegkasten (26) gegebenen Radkastenteil, (12 bzw. 15) anschließend angeordnet. Diese beiden Blendenteile (30, 31) werden durch ein Blendenteil (32) ergänzt, das mit dem hinteren, am Fahrgestellrahmen befestigten Radkastenteil (33) verbunden oder einstückig mit diesem ausgebildet ist. Die Blendenteile (30/31 und ggf. auch 32) sind vor Ort angeschraubt und können bei etwaigen Beschädigungen leicht ausgewechselt werden.

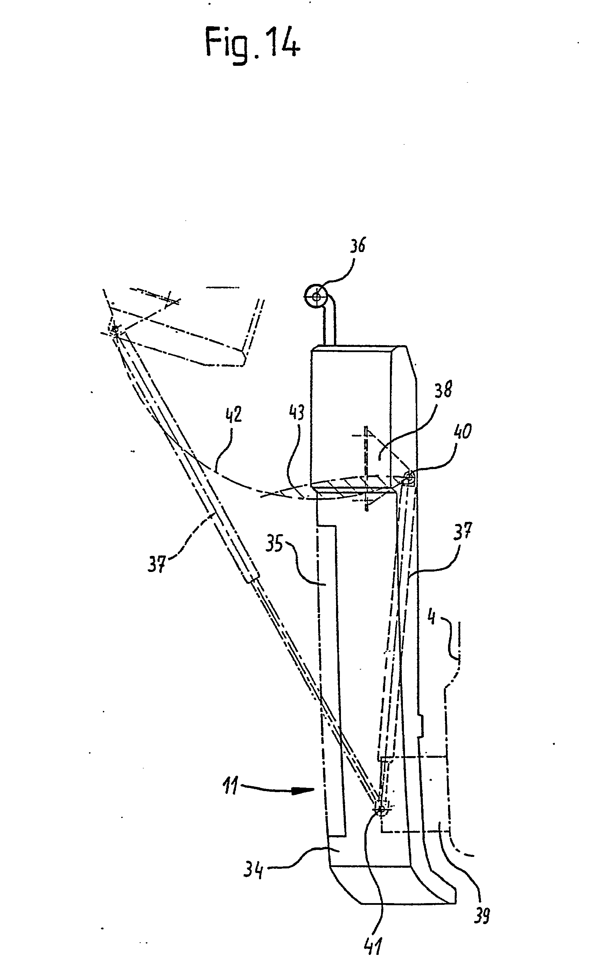

Die am Fahrerhaus, dort an der Frontwand (4) angeordnete Frontklappe (11) besteht aus einem Rahmen (34) aus glasfaserverstärktem duroplastischem Kunststoff und einem in den Rahmen (34) eingesetzten Kühlergrill (35) aus thermoplastischem Kunststoff. die Frontklappe (11) ist an der Frontwand (4), wie aus Fig. 14 ersichtlich, bei (36) auf Lagerzapfen befestigt und um diese zum Öffnen verschwenkbar. Die Frontklappe (11) ist mittels zweier Gasdruckfedern (37), von denen jede im Bereich des seitlichen Endes angeordnet ist, durch deren sogenannte "Über-Totpunkt-Anordnung" sowohl in Öffnungsstellung als auch in Schließstellung gehalten. Die Schließposition ist in Fig. 14 durchgezogen, die Öffnungsposition dagegen gestrichelt eingetragen. In der Schließstellung ist die Frontklappe (11) über flexible Puffer an der Frontwand (4) angedrückt. Eigene Arretierungsorgane sind aufgrund der "Über-Totpunkt-Stellung" der beiden Gasdruckfedern (37) nicht notwendig. Jede der beiden Gasdruckfedern (37) ist mit ihrem oberen Ende an einem an der Frontklappe (11) angeschlossenen Lagerbock (38) und an ihrem unteren Ende an einem an der Frontwand (4) befestigten Lagerbock (39) jeweils drehbeweglich angelenkt. Die Schwenkpunkte (36) (der Frontklappe 11) und (40 bzw. 41) (der Gasdruckfedern 37) sind dabei so aufeinander abgestimmt, daß die gewünschte "Über-Totpunkt-Stellung" realisierbar ist. Bei einem Verschwenken der Frontklappe (11) um den Drehpunkt (36) aus Schließposition vollführt der obere Schwenkpunkt (40) der beiden Gasdruckfedern (37) einen Kreisbogen (42), wobei die Gasdruckfedern (37) wegen der speziellen Anlenkung am unteren Schwenkpunkt (41) bei dieser Bewegung zunächst zusammengedrückt werden und sich dann wieder ausdehnen. Dieser Vorgang ist in Fig. 14 durch das schraffierte Feld zwischen den Kreisbögen (42) und (43) um (41) markiert. Aufgrund dieses Mechanismus ist die Frontklappe (11) vom Bedienungspersonal leicht lediglich durch Überwindung des Totpunktes anzuheben und öffnet sich dann anschließend durch die Gasdruckkraft von selbst; entsprechend ist beim Schließen der Frontklappe (11) lediglich die Totpunktstellung zu überwinden; danach drücken die Gasdruckfedern (37) die Frontklappe (11) selbständig in Schließposition. Die Totpunktstellung ist dann gegeben, wenn die Drehpunkte (36, 40 und 41) alle auf einer geraden Linie liegen. Dieser Öffnungs- und Schließmechanismus für die Frontklappe (11) erweist sich als besonders handhabungsgerecht und servicefreundlich.

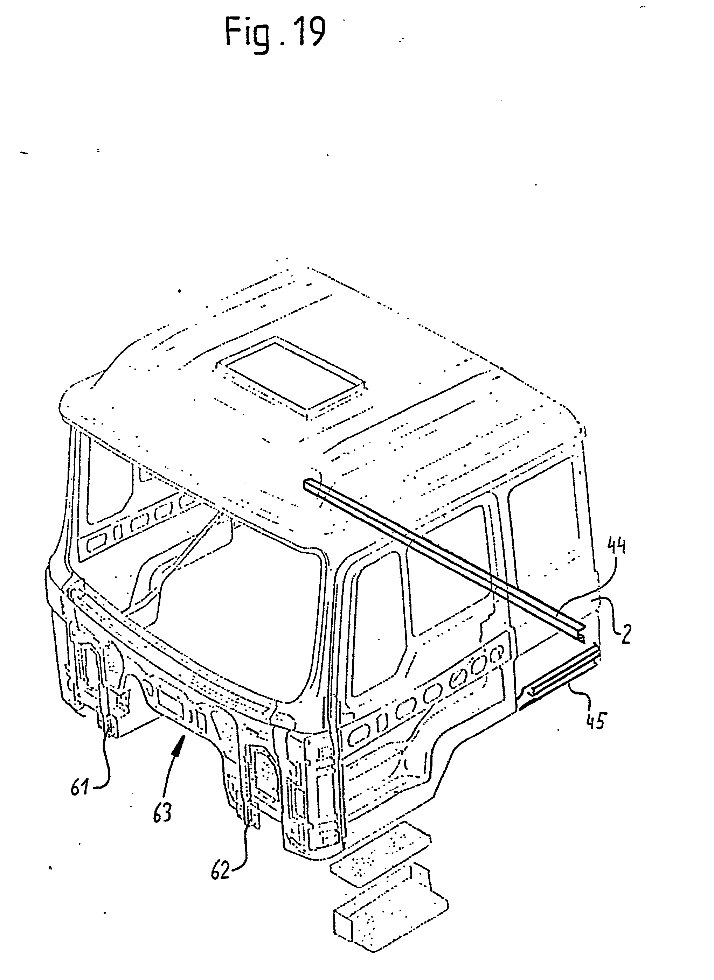

Die ebenso wie jede der beiden Seitenwände (2, 3) durch ein einstückiges Blech-Preßteil gebildete Rückwand (1) und die beiden Seitenwände (2, 3) sind an tragenden unteren Gerippeteilen (44, 45) befestigt (siehe Fig. 19); diese sind durch nach außen offene U- bzw. Z-förmige Stahlprofile gebildet und dienen zur Formstabilisierung. Hierdurch treten weder Lackier- noch Hohlraumkonservierungsprobleme und insbesondere auch keine Korrossionsprobleme auf.

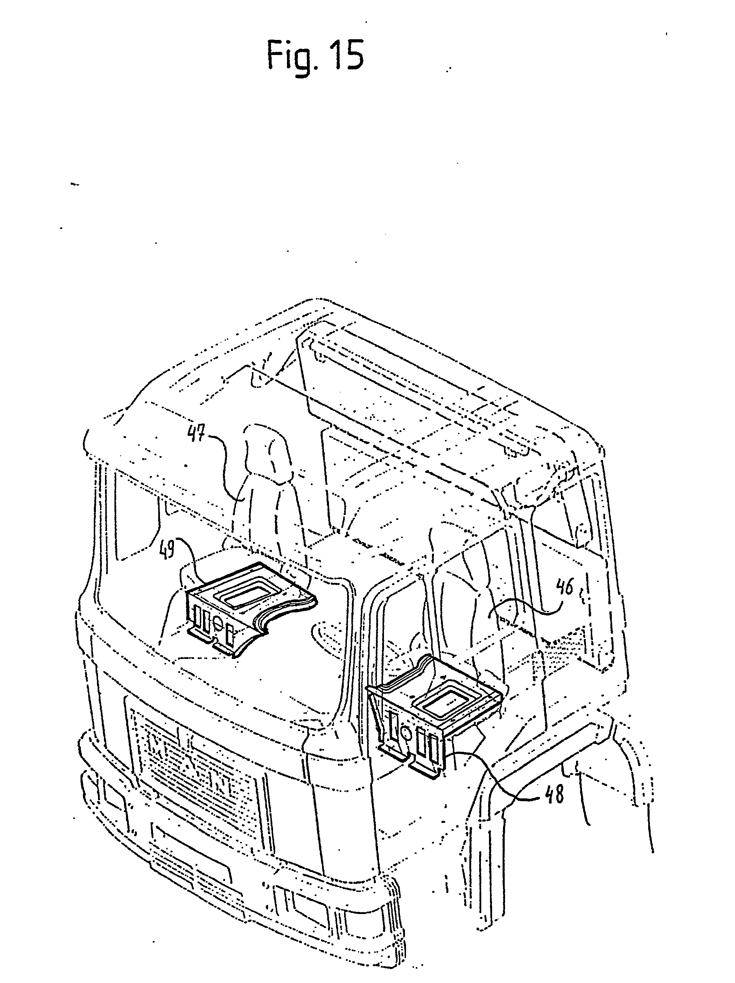

Im Fahrerhaus sind ein Fahrersitz (46) und ein Beifahrersitz (47) eingebaut. Wie besonders hervorgehoben in Fig. 15 dargestellt, ruht jeder Sitz (46 bzw. 47) auf einem Sitzunterbau (48 bzw. 49), von dem jeder ein Formversteifungsorgan bildend als tragendes Element der Bodengruppe (6) ausgebildet und an diese angeschweißt ist. Vorzugsweise ist jeder Sitzunterbau (48 bzw. 49) durch ein Blech-Preßteil gebildet.

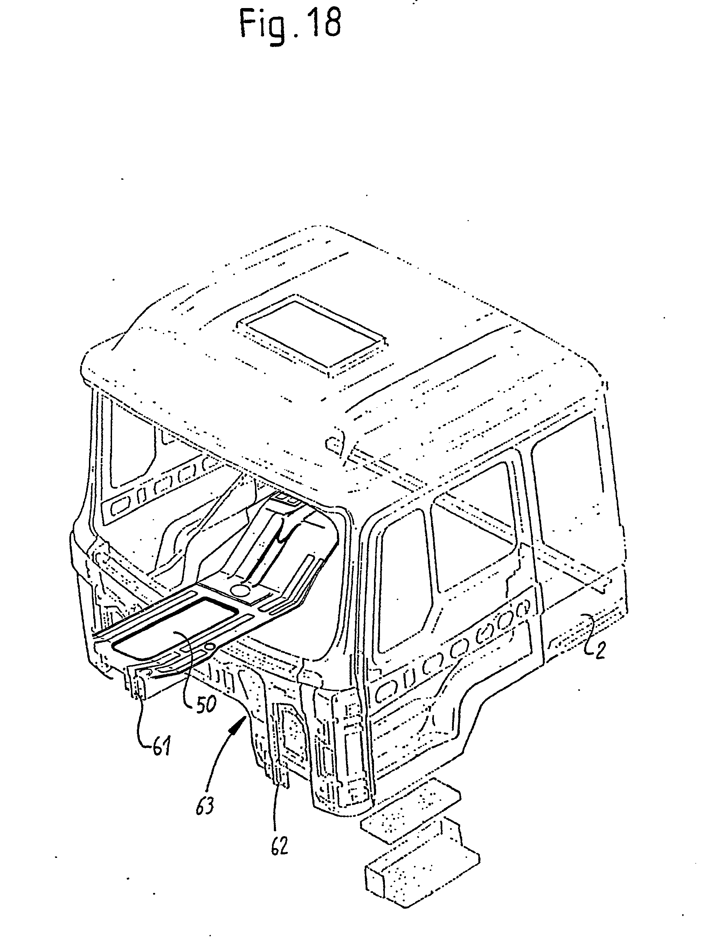

Auf der Beifahrerseite sind desweiteren unter und in der Bodengruppe (6) Vorkehrungen für den Einbau einer Zusatzheizung vorhanden (siehe Fig. 18). Dabei ist in der Bodengruppe (6) ein Durchbruch (50) gegeben, der bei Nichtvorhandensein der Zusatzheizung durch einen entsprechenden Deckel abgedeckt ist. In den Durchbruch ist im Falle des Vorsehens einer Zusatzheizung ein diese aufnehmender Kasten eingesetzt.

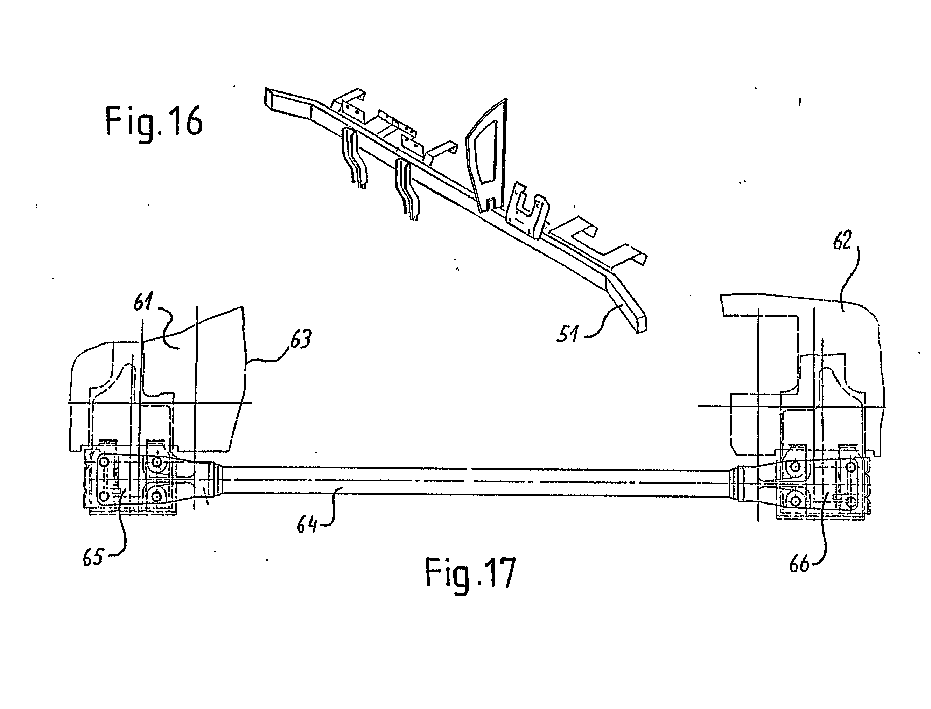

Die Frontwand (4) ist im Bereich des Armaturenbrettes (16) durch ein weiteres Organ formversteift. Bei diesem aus Fig. 16 ersichtlichem Formversteifungsorgan handelt es sich um ein beide Seitenwände (2, 3) verbindendes, formstabiles Querrohr (51), das sowohl Festigkeitsfunktionen in Quer- und Längsrichtung übernimmt als auch Träger für alle Armaturenbrett-Teile sowie Lenkungs- und Klimatisierungsteile ist. Zu diesem Zweck sind an dem Querrohr (51) verschiedene, hier nicht näher bezeichnete Aufnahme- und Befestigungsorgane vorhanden; Einzelheiten hierzu sind aus der Fig. 16 ersichtlich.

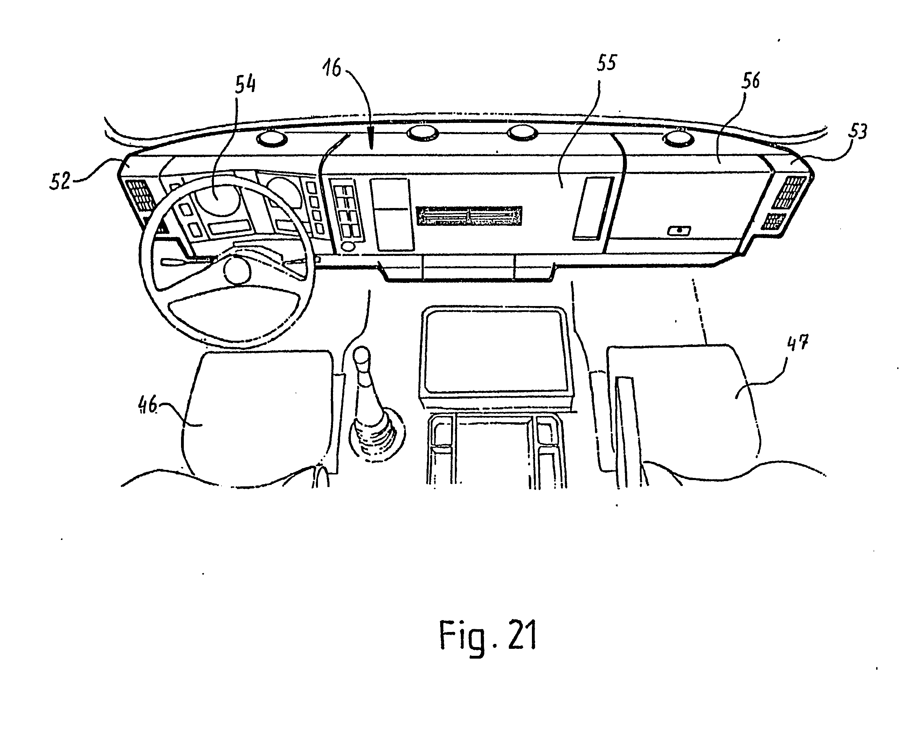

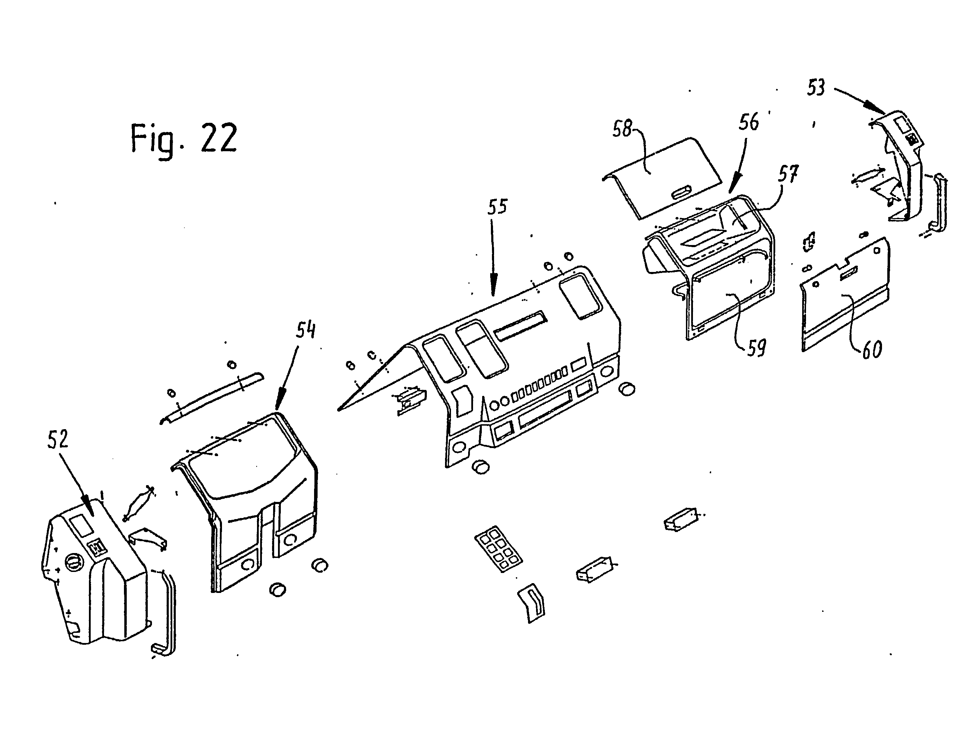

Das am Querrohr (51) befestigte Armaturenbrett (16) ist in seiner Gesamtansicht aus Fig. 21 und Detailansicht aus Fig. 22 ersichtlich. Das Armaturenbrett (16) ist in einzelne Module aufgeteilt, nämlich zwei Eckteile (52, 53), einen Instrumententräger (54), ein Mittelteil (55) und einen Handschuhkasten (56) mit Zentralelektrikteil. Das Handschuhkastenfach (57) ist durch einen Deckel (58) und das Zentralelektrikfach (59) durch einen Deckel (60) abdeckbar. Das Mittelteil (55) nimmt Teile der Heizung und Klimatisierungsanlage sowie Betätigungsorgane hierfür und andere Zwecke, außerdem Aschenbecher und dgl. auf.

Der Handschuhkasten (56) mit Zentralelektrikfach (59) und der Instrumententräger (54) sind so ausgebildet, daß beide als gleiche Teile sowohl für Links- und Rechtslenker-Lastkraftwagen als auch für unterschiedlich breite Fahrerhäuser bei entsprechender Breitenanpassung der beiden Eckteile (52, 53) gegeneinander austauschbar sind. Letzteres bedeutet, daß lediglich die beiden Eckteile (52, 53) für eine entsprechende Breitenanpassung innerhalb der Fahrerhausbaureihe in geänderter Form bereitgestellt werden müssen, um das Armaturenbrett zu vervollständigen. Dieser modulare Aufbau des Armaturenbrettes (16) hat den Vorteil, daß jeder einzelne Funktionsmodul im Bedarfsfalle leicht abgebaut und die von ihm getragenen bzw. abgedeckten Funktionsteile leicht überprüft oder ausgetauscht werden können.

An der Frontwand (4) unten, bzw. den sich dort anschließenden Bodengruppenpartien, und zwar zwischen den in Fig. 19 mit (61 und 62) bezeichneten Abschnitten ist als weiteres Formversteifungsorgan eine den in der Bodengruppe (6) gegebenen Tunnel (63) für Motor- und Kühlerabdeckung überbrückende biegesteife Quertraverse (64) vorgesehen. Diese in Einzelheiten in Fig. 17 dargestellte Quertraverse (64) weist an beiden Enden Befestigungsböcke (65, 66) auf, über die sie an besagten Abschnitten (61, 62) angeschraubt ist.

Hierdurch ist im Reparaturfall die Demontage und Montage eines Kühlers und anhängender Aggregate erleichtert, denn die Quertraverse (64) ist zu diesem Zweck leicht entfernbar.

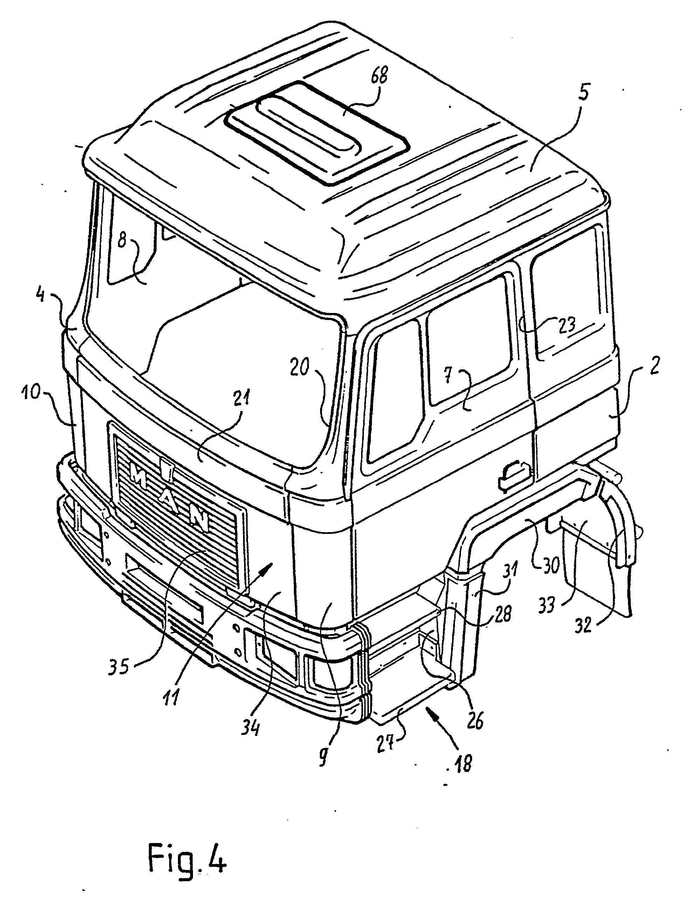

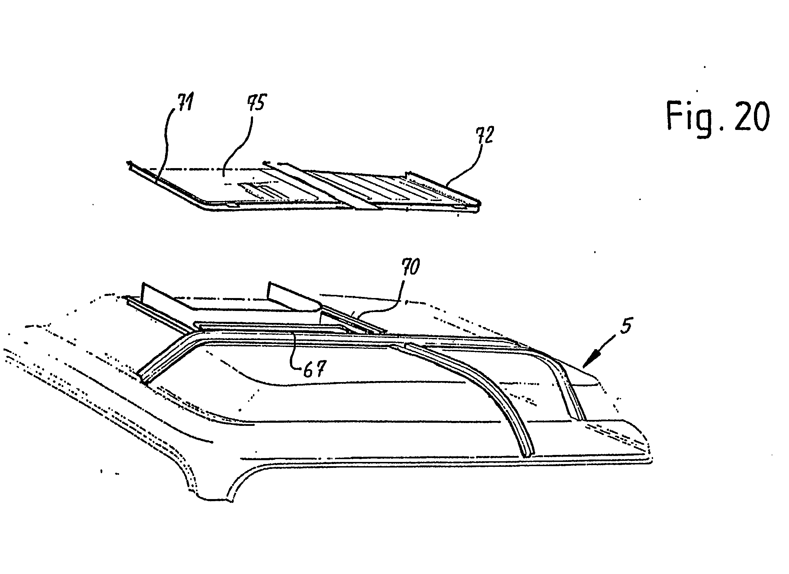

Als ein weiteres Formversteifungsorgan ist in der Dachgruppe (5), wie aus Fig. 20 ersichtlich, ein Gerippe (67) vorhanden, das gleichzeitig sowohl für den Einbau eines Schiebedaches als auch wahlweise einer Dachklappe ausgebildet ist. Die Ausführungsform des Fahrerhauses mit Dachklappe (68) ist in mehreren Figuren dargestellt. In Fig. 4 beispielsweise ist die Dachklappe (68) in Schließstellung, in Figuren 10 und 11 dagegen in Öffnungsposition dargestellt.

Die Ausführungsform mit Schiebedach (75) ist schematisiert in Fig. 5 gezeigt. Mit der Dachklappe (68) oder dem Schiebedach (75) ist ein Dachausschnitt (69) für Lüftungszwecke freigebbar. Dieser Dachausschnitt (69) ist beispielsweise aus Fig. 5 ersichtlich. In diesen Dachausschnitt (69) ist im Fall des Vorsehens einer Dachklappe (68) eine Dachklappenhalterung (70) oder alternativ hierzu eine Schiebedachhaltung (71) (siehe Fig. 20 oben) jeweils mit Betätigungsmechanismus für die Dachklappe bzw. das Schiebedach wahlweise einbaubar. Der Teil (72) der Schiebedachhalterung (71) erstreckt sich anschließend an den Dachausschnitt (69) und dient als Führungsorgan für die Bewegung des Schiebedaches (75) in Öffnungsstellung.

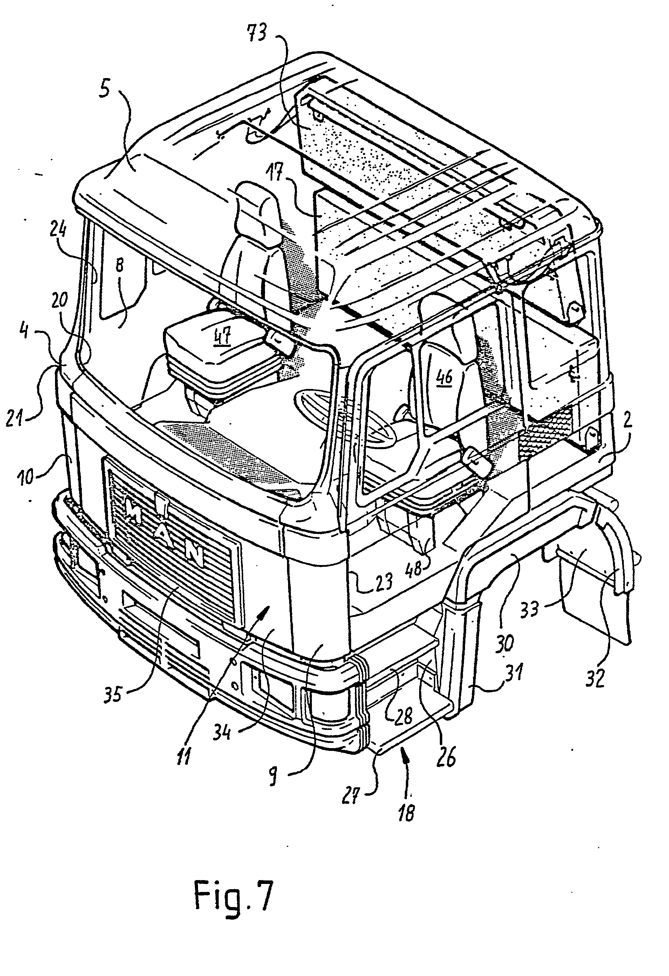

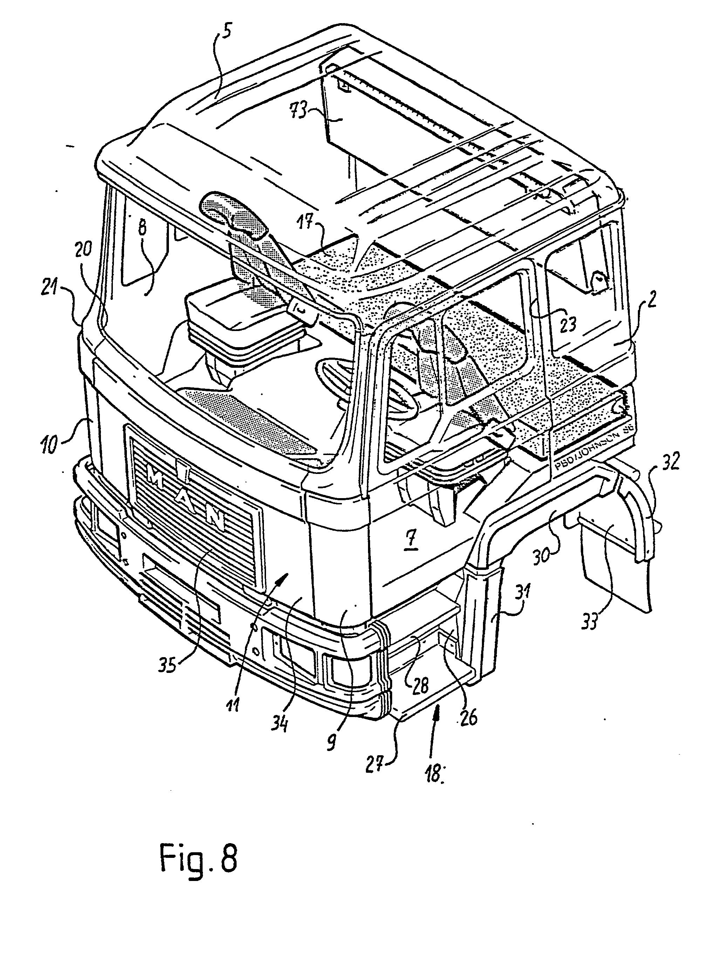

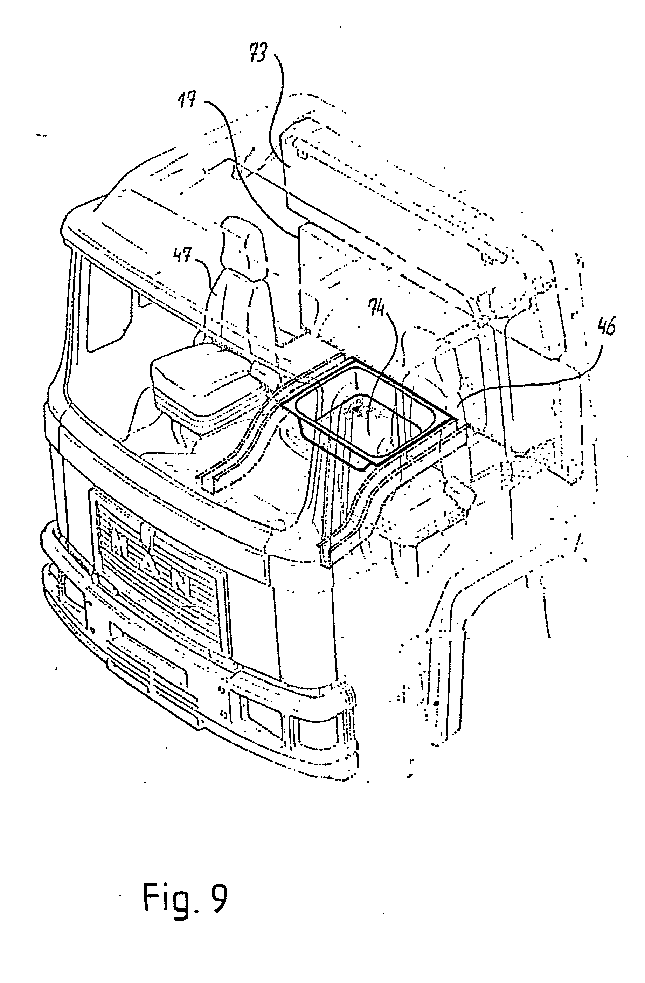

In Fahrerhäusern für Fernfahr-LKW's sind hinter den beiden Sitzen (46, 47) übereinander zwei Schlafliegen vorhanden, nämlich die untere Liege (17) und eine obere Liege (73). Die obere Liege (73) ist in an sich bekannter Weise hochklappbar und in hochgeklappter Stellung arretierbar. In der vorliegenden Fahrerhausbaureihe ist zusätzlich auch die untere Liege (17) hochklappbar und in hochgeklappter Stellung arretierbar ausgebildet – siehe die Figuren 7 und 8 –. Hierdurch ist im Fahrerhausinneren ein größerer als bislang nutzbarer Raum freigebbar, in dem Koffer oder dgl. verstaubar sind. In besonders vorteilhafter Weise wirkt sich das Hochklappen der unteren Liege (17) in einem Fahrerhaus eines Unterflur-Fernfahrerzugs aus, denn dort kann, wie aus Fig. 9 ersichtlich, in der Bodengruppe (6) eine Stauwanne (74) angeordnet sein, die ein für die Aufnahme wenigstens eines Koffers bzw. einer Reisetasche ausreichendes Volumen aufweist.

Diese Stauwanne (74) ist unter der hochklappbaren unteren Liege (17) angeordnet und vorzugsweise mit der Bodengruppe (6) verschraubt. Hierdurch wird das Raumangebot noch erheblich vergrößert.

**Patentansprüche**

1. Fahrerhaus-Baureihe für Frontlenker-Lastkraftwagen mit nach vorn kippbaren Fahrerhäusern unterschiedlicher Größe, wobei ein aus einer Rückwand (1), zwei Seitenwänden (2, 3), einer Frontwand (4), einer Dachgruppe (5) und einer Bodengruppe (6) zusammengesetztes Rohhaus eines Fahrerhauses durch eine Anzahl standardisierter, gleich ausgebildeter Funktionsmodule ergänzt wird, die unverändert an Fahrerhäusern unterschiedlicher Größe am hierfür jeweils entsprechend vorbereiteten Rohhaus anbaubar sind bzw. dieses ergänzen, wobei es sich bei diesen Funktionsmodulen unter die beiden Türen (7, 8), Armaturenbrett-Teile (16), Sitze (46, 47) und dergleichen Ein- bzw. Anbauteile handelt, dadurch gekennzeichnet, daß die Rückwand (1), die beiden Seitenwände (2, 3) und die Frontwand (4) jeweils durch einstückige Blechpreßteile gebildet und mit der Dachgruppe (5) sowie Bodengruppe (6) zum Rohhaus zusammenbaubar sind, daß die standardisierte Frontwand (4) am Übergang (19) zum Dachbereich zur Bildung einer Dachversteifung sowie unterhalb der Brüstungslinie (21) jeweils auf gesamter Breite nach hinten gezogen ist, wobei im unteren zurückgezogenen Bereich (22) zwei standardisierte, als Flankenschutz dienende Eckteile (9, 10), eine standardisierte Frontklappe (11) mit Ausstellmechanismus und von der Frontklappe (11) abdeckbare Funktionselemente befestigbar sind, daß als weitere standardisierte Funktionsmodule Radkasten- und -verblendteile (12 bis 15, 30 bis 33), die Teile des Armaturenbrettes (16) sowie ein komplett vom Fahrerhaus getrennt am Fahrgestell-Rahmen befestigbarer Einstieg (18) vorgesehen sind, und daß an exponierten Stellen des Fahrerhauses Formversteifungsorgane vorgesehen sind, von denen zumindest einige für die Übernahme von Zusatzfunktionen ausgebildet sind.

2. Fahrerhaus-Baureihe nach Anspruch 1, dadurch gekennzeichnet, daß an der Frontwand (4) innen über die ganze Breite gehend von der Brüstungslinie (21) abwärts eine als Formversteifungsorgan und für die Befestigung von Funktionselementen dienende Frontversteifungsplatte (25) angebracht ist.

3. Fahrerhaus-Baureihe nach Anspruch 2, dadurch gekennzeichnet, daß die Frontwand (4) innen im Bereich des Armaturenbrettes (16) durch ein weiteres Organ formversteift ist, bei dem es sich um ein beide Seitenwände (2, 3) verbindendes Querrohr (51) handelt, das sowohl Festigkeitsfunktion in Quer- und Längsrichtung übernimmt als auch Träger für alle Armaturenbrett-Teile sowie Lenkungs- und Klimatisierungsanlagen-Teile ist.

4. Fahrerhaus-Baureihe nach Anspruch 1, dadurch gekennzeichnet, daß die beiden sich seitlich an die Frontwand (4) anschließenden Seitenwände (2, 3) bei allen Fahrerhausvarianten für den Einbau einheitlich gleicher Türen (7, 8) mit entsprechend gleichen Türausschnitten (23, 24) versehen sind.

5. Fahrerhaus-Baureihe nach Anspruch 1, dadurch gekennzeichnet, daß Formversteifungsorgane bildende, tragende untere Gerippeteile (44, 45) vorgesehen sind, an denen die Seitenwände (2, 3) bzw. die Rückwand (1) befestigt sind und die durch lackierbadgerechte, nach außen offene U- bzw. Z-förmige Profile gebildet sind.

6. Fahrerhaus-Baureihe nach Anspruch 1, dadurch gekennzeichnet, daß beiderseits eines den Fahrzeugmotor und Kühler abdeckenden Tunnels (63) unten an der Frontwand (4) bzw. den dort anschließenden Teilen der Bodengruppe (6) Vorkehrungen (61, 62) für eine Schraubbefestigung einer biegesteifen Quertraverse (64) vorgesehen sind, die den Tunnel (63) überbrückt und ein Formversteifungsorgan bildet.

7. Fahrerhaus-Baureihe nach Anspruch 1, dadurch gekennzeichnet, daß in der sich oben an der Frontwand (4) anschließenden Dachgruppe (5) ein Gerippe (67) vorhanden ist, das ein Formversteifungsorgan bildet und gleichzeitig auch für den Einbau sowohl eines Schiebedaches (75) mit entsprechender Schiebedachhalterung (71, 72) als auch einer Dachklappe (68) mit entsprechender Dachklappenhalterung (70) ausgebildet ist.

8. Fahrerhaus-Baureihe nach Anspruch 1, dadurch gekennzeichnet, daß an der sich unten an der Frontwand (4) anschließenden Bodengruppe (6) zwei tragende Formversteifungsorgane angeschweißt sind, die gleichzeitig je einen Sitzunterbau (48, 49) für den darauf befestigten Fahrersitz bzw. Beifahrersitz bilden.

9. Fahrerhaus-Baureihe nach Anspruch 8, dadurch gekennzeichnet, daß jeder Sitzunterbau (48, 49) durch ein Blech-Preßteil gebildet ist.

10. Fahrerhaus-Baureihe nach Anspruch 1, dadurch gekennzeichnet, daß in der sich unten an der Frontwand (4) anschließenden Bodengruppe (6) auf der Beifahrerseite Vorkehrungen (50) für die Anbringung bzw. den Einbau einer Zusatzheizung vorhanden sind.

11. Fahrerhaus-Baureihe nach Anspruch 10, dadurch gekennzeichnet, daß in der Bodengruppe (6) ein Durchbruch (50) vorhanden ist, auf dem als Verschluß ein Deckel aufgesetzt oder in den ein die Zusatzheizung aufnehmender Kasten eingesetzt ist.

12. Fahrerhaus-Baureihe nach Anspruch 1, dadurch gekennzeichnet, daß die sich zwischen den Eckteilen (9, 10) erstreckende Frontklappe (11) an zwei schwenkbar an der Frontwand (1) gelagerten, je aus einem Zylinder und einem darin wirkenden Kolben bestehenden Gasdruckfedern (37) angelenkt ist, deren beide jeweils endseitige Anlenkpunkte (40, 41) derart angeordnet sind, daß die Frontklappe (11) sowohl in Öffnungsendstellung als auch in Schließendstellung durch eine "Über-Totpunkt-Lage" der Gasdruckfedern (37) gehalten ist und beim Verschwenken der Frontklappe (21) von Hand das weitere Öffnen bzw. weitere Schließen jeweils nach Überwindung der Totpunktstellung der Gasdruckfedern (37) durch letztere selbsttätig bis zur jeweiligen Frontklappen-Endstellung bewerkstelligt wird.

13. Fahrerhaus-Baureihe nach Anspruch 12, dadurch gekennzeichnet, daß zwei gleiche und gleichwirksam im Bereich des seitlichen Endes der Frontklappe (11) hinter dieser wirkend angeordnete Gasdruckfedern (37) vorgesehen und deren Anlenkpunkte (40, 41) so gelegt sind, daß die Totpunktlage der Gasdruckfedern (37), also deren zusammengedrückteste Zylinder-Kolben-Stellung mit in einer durch die Frontklappen-Anlenkpunkte (36) und untere Gasdruckfeder-Anlenkpunkte (41) gehenden Ebene liegenden Gasdruckfeder-Achsen, bei einer um etwa so gegenüber Schließendstellung verschwenkten Öffnungs- bzw. Schließstellung der Frontklappe (11) gegeben ist.

14. Fahrerhaus-Baureihe nach einem der Ansprüche 12 und 13, dadurch gekennzeichnet, daß die Gasdruckfedern (37) mit ihrem unteren Ende an einem an der Frontwand (11) angeordneten Lagerbock (39) um je einen Lagerzapfen (41) schwenkbar und mit ihrem oberen Ende an einem im oberen Bereich der Frontklappe (2) innenseitig an dieser angeordneten Lagerbock (38) um je einen Lagerzapfen (40) schwenkbar angeschlossen und diese Lager- bzw. Schwenkstellen derart angeordnet sind, daß die Schwenkbewegung der Gasdruckfedern (37) in einer senkrecht zur Schwenkachse der Frontklappe (11) gegebenen Ebene erfolgt, und daß die Öffnungsendstellung der Frontklappe (11) bei einem Öffnungswinkel von etwa 120° durch die größte Ausfahrstellung der Gasdruckfedern (37) und die Schließendstellung der Frontklappe (11) durch frontwandseitig angeordnete Anschlagpuffer aus flexiblem Material vorgegeben sind.

15. Fahrerhaus-Baureihe nach Anspruch 1, dadurch gekennzeichnet, daß jeder Einstieg (18) durch einen Kasten (26) mit darin angeordneten Trittbrettern (27, 28) gebildet, für alle Fahrerhaus-Größen gleich und komplett vom Fahrerhaus getrennt am Fahrgestell-Rahmen befestigt ist.

16. Fahrerhaus-Baureihe nach Anspruch 15, dadurch gekennzeichnet, daß die Trittbretter (27, 28) jedes Einstieges (18) in dessen Kasten (26) höhenverstellbar montierbar und hierzu im Kasten (26) Montagehilfen (29) derart vorhanden sind, daß — verschiedenen Reifengrößen und Achskonstruktionen Rechnung tragend — die gesetzlich vorgeschriebenen Trittbretthöhen und -abstände einhaltbar sind.

17. Fahrerhaus-Baureihe nach Anspruch 1, dadurch gekennzeichnet, daß die beiden, die Räder der Vorderachse abdeckenden Radkästen jeweils mehrteilig ausgebildet sind und jedes Radkasten-Teil einen Funktionsmodul bildet, dergestalt, daß ein vorderes Teil (12 bzw. 14) eines solchen Radkastens vom Fahrerhaus getrennt mit dem ebenfalls vom Fahrerhaus getrennt am Fahrgestell-Rahmen angeordneten Kasten (26) des Einstieges (18) vereinigt ist, daß ferner ein hinteres Teil (33) eines solchen Radkastens ebenfalls vom Fahrerhaus getrennt am Fahrgestell-Rahmen befestigt ist, und daß ein oberes Teil (13 bzw. 15) eines solchen Radkastens durch das Fahrerhaus, und zwar einen Abschnitt von dessen Bodengruppe (6) gebildet ist.

18. Fahrerhaus-Baureihe nach Anspruch 14, dadurch gekennzeichnet, daß die besagten Radkastenteile durch äußere Blenden (30, 31) ergänzt sind, von denen zumindest ein Teil derselben auswechselbar ist und die ebenfalls Funktionsmodule bilden.

19. Fahrerhaus-Baureihe nach den Ansprüchen 17 und 18, dadurch gekennzeichnet, daß eine Blende (30) am an der Bodengruppe (6) des Fahrerhauses gegebenen Radkasten-Teil (13 bzw. 15) und eine weitere Blende (31) an dem mit dem Kasten (26) des Einstieges (18) vereinigten Radkasten-Teil (12 bzw. 14) jeweils seitlich anschließend angeordnet sind.

20. Fahrerhaus-Baureihe nach Anspruch 1, dadurch gekennzeichnet, daß das Armaturenbrett (16) in fünf Module aufgeteilt ist, nämlich zwei Eckteile (52, 53), einen Instrumententräger (54), ein Mittelteil (55) und einen Handschuhkasten mit Zentralelektrik (56), wobei letzterer und der Instrumententräger (54) so ausgebildet sind, daß sie als gleiche Teile sowohl für Links- und Rechtslenker-Lastkraftwagen als auch für unterschiedlich breite Fahrerhäuser bei entsprechender Breitenpassung der beiden Eckteile (52, 53) untereinander austauschbar sind.

21. Fahrerhaus-Baureihe nach Anspruch 1, dadurch gekennzeichnet, daß in einem einem Fernlastkraftwagen zugeordneten Fahrerhaus zwei Schlafliegen (17, 73) vorhanden sind und außer der oberen auch die untere, hinter den Sitzen (46, 47) angeordnete Liege (17) hochklappbar ist und in hochgeklapptem Zustand einen relativ großen Stauraum freigibt.

22. Fahrerhaus-Baureihe nach Anspruch 1, dadurch gekennzeichnet, daß bei einem Fernlastkraftwagen mit Unterfluranordnung des Motors in der Bodengruppe (6) des Fahrerhauses eine Stauwanne (74) angeordnet ist, die ein für die Aufnahme wenigstens eines Koffers bzw. einer Reisetasche ausreichendes Volumen aufweist und durch eine untere, hinter den Sitzen (46, 47) angeordnete Liege (17) abgedeckt ist, die ebenso wie eine obere Liege (73) hochklappbar ist und in hochgeklapptem Zustand einen entsprechend großen Stauraum freigibt.

**Revendications**

1. Gamme de cabines de conduite pour camions à cabine avancée comportant des cabines de conduite de différentes dimensions pouvant basculer vers l'avant, la cabine brute composée d'une paroi arrière (1), de deux parois latérales (2, 3), d'une paroi frontale (4), d'un groupe de toit (5) et d'un groupe de fond (6), étant complétée - par un certain nombre de modules fonctionnels standardisés, qui sans modification peuvent être montés sur des cabines de différentes dimensions préparées de façon appropriée ou pour compléter ces cabines, ou ces deux modules fonctionnels sont, entre autres, les deux portes (7, 8), les pièces de tableau de bord (16), les sièges (46, 47) ou analogues comme pièces de montage ou d'intégration, caractérisée en ce que la paroi arrière (1), les deux parois latérales (2, 3) et la paroi frontale (4) sont constituées respectivement par des pièces de tôles matricées en un seul morceau et peuvent être réunies avec le groupe de toit (5) et le groupe de fond (6) pour constituer la cabine brute, la paroi avant (4) standardisée étant développée chaque fois sur toute sa largeur, vers l'arrière dans la zone du toit pour former un renforcement de toit et endessous de la ligne du rebord d'appui (21), elle est en retrait sur toute la largeur, et dans la zone en retrait (22) inférieure, on trouve deux éléments de coin (9, 10) standardisés, servant de moyens de protection de flanc, un volet frontal (11) standardisé avec un mécanisme de débattement et des éléments fonctionnels susceptibles de recouvrir le volet frontal (11) sont susceptibles d'être fixés, et en ce que comme autres modules fonctionnels standardisés, on trouve des pièces de caisse de roues et des pièces fixes (12-15, 30-33), des pièces du tableau de bord (16) ainsi qu'un dispositif d'accès (18) complètement séparé de la cabine de conduite et qui se fixe au châssis du véhicule, et en ce qu'aux endroits exposés de la cabine, on trouve des organes de rigidification de forme dont au moins certains servent à réaliser des fonctions supplémentaires.

2. Gamme de cabines de conduite selon la revendication 1, caractérisée en ce qu'au niveau de la paroi avant (4), intérieurement et sur toute la largeur, partant de la ligne de rebord d'appui (21), en descendant, on a une plaque de renforcement avant (25) servant d'organe de renforcement de forme et d'organe de fixation d'éléments fonctionnels.

3. Gamme de cabines de conduite selon la revendication 2, caractérisée en ce que la paroi avant (4) comporte intérieurement au niveau du tableau de bord (16), un autre organe de renforcement de forme, constitué par une traverse tubulaire (51) reliant les deux parois latérales (2, 3), traverse qui assure à la fois la fonction de renforcement dans la direction transversale et dans la direction longitudinale et de support pour tous les éléments du tableau de bord ainsi que pour les éléments de direction et de l'installation de climatisation.

4. Gamme de cabines de conduite selon la revendication 1, caractérisée en ce que les deux parois latérales (2, 3) qui rejoignent latéralement la paroi frontale (4) dans toutes les variantes de cabines de conduite, sont prévues pour le montage de portes (7, 8) uniformes avec les mêmes découpes de portes (23, 24).

5. Gamme de cabines de conduite selon la revendication 1, caractérisée en ce qu'elle comporte des organes de renforcement de forme qui constituent les parties de nervures (44, 45) portantes, inférieures, auxquelles sont fixées les parois latérales (2, 3) et la paroi arrière (1) et qui sont formées par des profilés ouverts en forme de U ou de Z permettant le laquage au bain.

6. Gamme de cabines de conduite selon la revendication 1, caractérisée en ce que des deux côtés d'un tunnel (63) recouvrant le moteur et le radiateur du véhicule, à la base de la paroi avant (4) ou des éléments adjacents à cet endroit et appartenant au groupe de fond (6), on a des moyens (61, 62) pour une fixation par vis d'une traverse (64) rigide en flexion et passant par-dessus le tunnel (63) et constituant un organe de renforcement de forme.

7. Gamme de cabines de conduite selon la revendication 1, caractérisée en ce que dans le groupe de toit (5) qui rejoint en partie haute la paroi frontale (4) sont prévues des nervures (67) constituant l'organe de renforcement de forme et servant en même temps au montage d'un toit coulissant (75) et de son moyen de fixation correspondant (71, 72) ainsi que d'un volet de toit (68) avec un moyen de fixation correspondant (70).

8. Gamme de cabines de conduite selon la revendication 1, caractérisée en ce que deux organes de renforcement de forme, porteurs, sont soudés au groupe de fond (6) adjacent en partie basse à la paroi avant (4), ces organes servant en même temps de structures d'appui (48, 49) pour le siège du conducteur et le siège du passager fixés à ces structures.

9. Gamme de cabines de conduite selon la revendication 8, caractérisée en ce que chaque infrastructure de siège (48, 49) est constituée par une pièce en tôle matricée.

10. Gamme de cabines de conduite selon la revendication 1, caractérisée en ce que le groupe de fond (6) adjacent aux parties basses à la paroi avant (4) comporte du côté du siège du passager, des moyens (50) pour la mise en place ou l'intégration d'un chauffage auxiliaire.

11. Gamme de cabines de conduite selon la revendication 10, caractérisée par un passage (50) prévu dans le groupe de fond (6), passage sur lequel se place un couvercle pour en assurer la fermeture ou qui peut recevoir un caisson comportant le chauffage auxiliaire.

12. Gamme de cabines de conduite selon la revendication 1, caractérisée en ce que le volet avant (11) qui s'étend entre les éléments de coin (9, 10) est monté sur deux ressorts à gaz (37) montés pivotants sur la paroi avant (1) et comprenant chacun un cylindre avec un piston, et les deux points d'articulation d'extrémité (40, 41) de ces ressorts à gaz sont prévus pour que le volet frontal (11) soit maintenu à la fois en position d'ouverture et en position de fermeture par le passage d'un point métastable (point mort) des ressorts à gaz (37) et lorsqu'on bascule manuellement le volet frontal (21), la suite du mouvement d'ouverture ou de fermeture après le passage du point mort, est assurée par les ressorts à gaz (37) automatiquement jusqu'à ce que le volet soit venu dans la position de fin de course respective.

13. Gamme de cabines de conduite selon la revendication 12, caractérisée par deux ressorts à gaz (37) identiques et de même action prévus dans la zone de l'extrémité latérale du volet avant (11), derrière celui-ci et les points d'articulation (40, 41) de ces ressorts à gaz sont conçus pour que la position métastable (point mort) des ressorts à gaz (37) c'est-à-dire la position de compression maximale de l'ensemble cylindre-piston soit située dans un plan passant par les points d'articulation (36) du volet avant et les points d'articulation inférieurs (41) des ressorts à gaz en passant par l'axe de ces ressorts et en étant inclinée d'environ 30° par rapport à la position de fermeture ou d'ouverture du volet avant (11).

14. Gamme de cabines de conduite selon l'une des revendications 12 et 13, caractérisée en ce que l'extrémité inférieure des ressorts à gaz (37) est montée de manière pivotante dans un bloc de palier (39) prévu au niveau de la paroi avant (11), autour de chaque fois un tourillon de palier (41) et l'extrémité supérieure de ces ressorts est reliée à un bloc de palier (38) prévu dans la zone supérieure du volet avant (12), à l'intérieur de celui-ci et sur celui-ci autour de chaque fois un tourillon de palier (40) et les positions de palier et de basculement sont prévues pour que le mouvement de basculement des ressorts à gaz (37) se fasse dans un plan perpendiculaire à l'axe de basculement du volet avant (11) et en ce que la position d'ouverture du volet avant (11) pour un angle d'ouverture d'environ 120° soit prédéterminée par la position de sortie maximale des ressorts à gaz (37) et que la position de fermeture du volet avant (11) soit définie par des tampons de butée en un matériau souple prévus au niveau de la paroi avant.

15. Gamme de cabines de conduite selon la revendication 1, caractérisée en ce que chaque dispositif d'accès (18) est formé par un caisson (26) dans lequel sont placés des marchepieds (27, 28), ce caisson étant identique pour toutes les tailles de cabines de conduite et est fixé à l'état terminé, et séparé de la cabine, sur le châssis du véhicule.

16. Gamme de cabines de conduite selon la revendication 15, caractérisée en ce que les marchepieds (27, 28) de chaque dispositif d'accès (18) sont montés de manière réglable en hauteur dans les caissons (26) et des gabarits de montage (29) sont prévus dans les caissons (26) pour tenir compte de différentes dimensions de pneumatiques et de constructions d'essieux, et régler les hauteurs des marchepieds ou la distance entre ceux-ci selon la réglementation.

17. Gamme de cabines de conduite selon la revendication 1, caractérisée en ce que les deux caisses de roues recouvrant les roues de l'essieu avant sont en plusieurs parties et chaque élément de caisson de roues constitue un module fonctionnel tel qu'une partie avant (12, 14) d'un tel caisson de roues soit réunie au châssis du véhicule séparément du caisson (26) du dispositif d'accès (18) et en ce qu'en outre une partie arrière (33) d'un tel caisson de roues est également fixée au châssis du véhicule séparément de la cabine de conduite et une partie supérieure (13, 15) d'un tel caisson de roues au niveau de la cabine forme un segment du groupe de fond (6).

18. Gamme de cabines de conduite selon la revendication 14, caractérisée en ce que les éléments de caisson de roues sont complétés par des écrans extérieurs (30, 31) dont au moins une partie est interchangeable et ces écrans constituant également des modules fonctionnels.

19. Gamme de cabines de conduite selon l'une des revendications 17 et 18, caractérisée en ce qu'un écran (30) est prévu sur une partie de caisson de roues (13, 15) appartenant au groupe de fond (6) de la cabine et un autre écran (31) est relié à l'élément de caisson de roues (12, 14) réuni au caisson (26) du dispositif d'accès (18) de manière chaque fois adjacente latéralement.

20. Gamme de cabines de conduite selon la revendication 1, caractérisée en ce que le tableau de bord (16) est subdivisé en cinq modules à savoir deux éléments de coins (52, 53), un support d'instrument (54), une partie médiane (55) et un caisson videpoches avec l'électricité centrale (56), ce dernier et le support d'instrument (54) étant conçus pour être interchangeables comme pièces identiques à la fois pour un camion avec conduite à gauche et conduite à droite et pour des cabines de conduite de largeurs différentes par adaptation correspondante en largeur des deux éléments de coin (52, 53).

21. Gamme de cabines de conduite selon la revendication 1, caractérisée en ce que la cabine associée à un camion pour grands trajets comporte deux couchettes (17, 73) et non seulement la couchette supérieure mais également la couchette inférieure (17) peuvent être relevées derrière les sièges (46, 47) et libèrent à l'état relevé, un volume de rangement ) relativement important.

22. Gamme de cabines de conduite selon la revendication 1, caractérisée en ce que dans le cas de camions pour grandes distances avec montage du moteur sous le plancher, un bac (74) est intégré au groupe de 5 fond (6) de la cabine de conduite pour avoir un volume au moins suffisant pour recevoir une valise ou un sac de voyage et est recouverte par la couchette inférieure (17) derrière les sièges (46, 47), et qui peut être relevée comme la couchette supérieure (76) et dégage un volume de rangement de dimensions correspondantes lorsque cette couchette est relevée.

## Claims

1. A cab production series for front-steering lorries having front-tipping cabs of varying size, in which a basic cab shell composed of a rear wall (1), two side walls (2, 3), a front wall (4), a roof group (5) and a floor group (6) is supplemented by a number of standardized, identically constructed function modules which can be fitted without modification to cabs of varying size on the respective basic shell correspondingly prepared for this purpose or which supplement the latter, these function modules consisting among other things of the two doors (7, 8), dashboard parts (16), seats (46, 47) and similar parts to be installed or added on, characterized in that the rear wall (1), the two side walls (2, 3) and the front wall (4) are formed in each case by single-piece sheet-metal pressed parts and can be assembled together with the roof group (5) and floor group (6) to form the basic shell, that the standardized front wall (4) is drawn rearwardly at the transition (19) to the roof zone so as to form a roof reinforcement and also underneath the sill line (21) in each case over the entire width, two standardized corner parts (9, 10) serving as flank protection, a standardized front flap (11) with a stay mechanism and function elements which can be covered by the front flap (11) being securable in the bottom drawn-back zone (22), that wheel arch parts and wheel arch covering parts (12 to 15, 30 to 33), the parts of the dashboard (16) and a set of entry steps (18) securable to the chassis frame completely separately from the cab are provided as additional standardized function modules, and that structural reinforcement members are provided at exposed points of the cab, at least some of which are designed to perform additional functions.

2. A cab production series according to Claim 1, characterized in that a front reinforcement plate (25) serving as a structural reinforcement member and for the securing of function elements is mounted on the front wall (4) internally over the entire width downwards from the sill line (21).

3. A cab production series according to Claim 2, characterized in that the front wall (4) is structurally reinforced internally in the region of the dashboard (16) by an additional member consisting of a cross-tube (51) which connects both side walls (2, 3) and which both performs a strengthening function in the transverse and longitudinal direction and also is a support for all the dashboard parts and parts of the steering and air-conditioning installations.

4. A cab production series according to Claim 1, characterized in that, in the case of all cab variations, for the purpose of installing uniformly identical doors (7, 8), the two side walls (2, 3) laterally adjoining the front wall (4) are provided with correspondingly identical door cut-outs (23, 24).

5. A cab production series according to Claim 1, characterized in that lower supporting framework parts (44, 45) are provided, forming structural reinforcement members to which the side walls (2, 3) and the rear wall (1) are secured and which are formed by outwardly open ushaped or Z-shaped profiles designed to take account of paint bath requirements.

6. A cab production series according to Claim 1, characterized in that on both sides of a tunnel (63) covering the vehicle engine and radiator, at the bottom on the front wall (4) or on the parts of the floor group (6) adjoining at that point, provision is made (61, 62) for the screw fastening of a bending-resistant crossmember (64) which spans the tunnel (63) and forms a structural reinforcement member.

7. A cab production series according to claim 1, characterized in that in the roof group (5) adjoining the front wall (4) at the top there is a framework (67) which forms a structural reinforcement member and at the same time is also designed for the installation both of a sliding roof (75) with corresponding sliding-roof mounting (71, 72) and of a roof flap (68) with corresponding roof-flap mounting (70).

8. A cab production series according to Claim 1, characterized in that welded to the floor group (6) adjoining the frontwall (4) at the bottom there are two supporting structural reinforcement members which at the same time each form a seat substructure (48, 49) for the driver's seat and passenger seat secured thereon.

9. A cab production series according to Claim 8, characterized in that each seat substructure (48, 49) is formed by a sheet-metal pressed part.

10. A cab production series according to Claim 1, characterized in that provision is made (50) in the floor group (6) on the passenger side adjoining the front wall (4) at the bottom for the mounting or the installation of an additional heating unit.

11. A cab production series according to claim 10, characterized in that in the floor group (6) there is an opening (50) onto which a cover is placed as a closure or into which a box accommodating the additional heating unit is inserted.

12. A cab production series according to claim 1, characterized in that the front flap (11) extending between the corner parts (9, 10) is articulated on two gas pressure springs (37) pivotably mounted on the front wall (1) and each consisting of a cylinder and a piston acting therein and the two respective end-side articulation points (40, 41) of which are arranged such that the front flap (11) is retained both in the open end position and in the closed end position by an "over dead centre arrangement" of the gas pressure springs (37) and, when the front flap (21) is manually pivoted, further opening or further closing is effected in each case, after the dead centre position of the gas pressure springs (37) has been overcome, automatically by the latter as far as the respective front-flap end position.

13. A cab production series according to claim 12, characterized in that two identical and identically operative gas pressure springs (37) arranged in the region of the side end of the front flap (11) so as to operate behind the latter are provided and their articulation points (40, 41) are located such that the dead centre arrangement of the gas pressure springs (37), i.e. their most compressed cylinder/piston position, is defined by axes of the gas pressure springs lying in a plane passing through the front flap articulation points (36) and bottom articulation points (41) of the gas pressure springs when the front flap (11) is in an opening or closing position pivoted through about 30° with respect to the closed end position.

14. A cab production series according to one of claims 12 and 13, characterized in that the gas pressure springs (37) are joined, pivotably about a respective bearing pin (41), with their bottom end to a bracket (39) arranged on the front wall (11) and, pivotably about a respective bearing pin (40), with their top end to a bracket (38) arranged in the upper region of the front flap (2) internally on the latter and these bearing or pivot points are arranged such that the pivoting movement of the gas pressure springs (37) occurs in a plane lying perpendicular to the pivoting axis of the front flap (11), and that the open end position of the front flap (11), in the case of an opening angle of about 120°, is determined by the greatest extension of the gas pressure springs (37) and the closed position of the front flap (11) by stop buffers made of flexible material and arranged on the front wall side.

15. A cab production series according to Claim 1, characterized in that each set of entry steps (18) is formed by a box (26) with footboards (27, 28) arranged therein, is identical for all cab sizes and is secured to the chassis frame completely separately from the cab.

16. A cab production series according to Claim 15, characterized in that the footboards (27, 28) of each set of entry steps (18) can be mounted in the box (26) thereof so as to be adjustable heightwise and assembly aids (29) are present inside the bx% (26) for this purpose such that – taking into account different tyre sizes and axle designs – the legally prescribed footboard heights and distances can be observed.

17. A cab production series according to Claim 1, characterized in that the two wheel arches covering the wheels of the front axle are each constructed as a plurality of parts and each wheel-arch part forms a function module such that a front part (12, 14) of such a wheel arch, separate from the cab, is united with the box (26) of the set of entry steps (18) arranged on the chassis frame also separately from the cab, that furthermore a rear part (33) of such a wheel arch is secured to the chassis frame, also separately from the cab, and that an upper part (13, 15) of such a wheel arch is formed by the cab, namely by a portion of the floor group (6) thereof.

18. A cab production series according to claim 14, characterized in that the said wheel-arch parts are supplemented by outer covering elements (30, 31), at least some of which are interchangeable and also form function modules.

19. A cab production series according to claims 17 and 18, characterized in that one covering element (30) is arranged laterally adjoining on the wheel-arch part (13, 15) located on the floor group (6) of the cab and another covering element (31) is arranged laterally adjoining on the wheel-arch part (12, 14) united with the box (26) of the set of entry steps (18).

20. A cab production series according to claim 1, characterized in that the dashboard (16) is divided into five modules, namely two corner parts (52, 53), an instrument support (54), a central part (55) and a glove box with central electrics (56), the latter and the instrument support (54) being designed such that they are interchangeable as identical parts both for left-hand drive and right-hand drive lorries and also for cabs of varying width, with corresponding width adjustment of the corner parts (52, 53).

21. A cab production series according to claim 1, characterized in that two sleeping berths (17, 73) are provided in a cab associated with a long-distance lorry and in addition to the upper berth the lower berth (17) arranged behind the seats (46, 47) can also be folded up and creates a relatively large stowage space in the folded-up state.

22. A cab production series according to claim 1, characterized in that in a long-distance lorry with the engine arranged under the floor the floor group (6) of the cab has a stowage trough (74) which has a large enough volume to accommodate at least a suitcase or a travelling bag and is covered by a lower berth (17) which is arranged behind the seats (46, 47) and can also be folded up like an upper berth (73) and in the foldedup condition creates a correspondingly large stowage space.

Fig.1

Fig.2

Fig.3

Fig.4

Fig.5

Fig. 6

Fig. 7

Fig. 8

Fig. 9

# Fig. 10

# Fig. 11

Fig.12

Fig.13

# Fig.14

# Fig. 15

Fig.16

51

62

Fig.17

61

63

65

64

66

EP 0 247 295 B1

# Fig. 18

# Fig.19

Fig. 20

71  75  72

70

67

5

EP 0 247 295 B1

Fig. 21

Fig. 22